# EUROPEAN PATENT APPLICATION

(11) **EP 4 667 887 A2**
(43) Date of publication of application: **24.12.2025**
(21) Application number: 25160929.3
(22) Date of filing: 28.02.2025
(51) Int. Cl.: G01M 3/20, G01N 15/08

(54) **APPARATUS, SYSTEM AND METHODS FOR TESTING A FILTER**

(30) Priority: 04.03.2024 US 202418594731
(71) Applicant: Hamilton Associates, Inc., Owings Mills, MD 2117-2247 (US)
(72) Inventor: ADKINS, William Adkins, Monkton, Maryland (US); DALBY, Mellissa Jamie, Baltimore, Maryland (US); PATEL, Gautam, Baltimore, Maryland (US); POWER, James Michael, Baltimore, Maryland (US)
(74) Representative: AWA Denmark A/S

(57) **Abstract**

A preferred form of the invention is directed to a system and method used to test filters in situ. The system preferably includes a base unit and a handheld probe operably associated with the base unit. The probe is configured to be deployed adjacent the filter being tested while the filter is located in an operating position. The handheld probe and/or base unit can be provided with a virtual or physical trim/rewind activation member to enable the user to erase scan data that the user knows is not reflective of filter leakage or filter efficiency or lack thereof of the filter being tested. The handheld probe and/or base unit can be provided with one or more interactive screens or graphical user interfaces including one or more virtual activation icons as opposed to physical activation members for performing numerous different functions associated with testing a filter in situ.

## Description

### FIELD OF THE INVENTION

Preferred forms of the present invention are directed to apparatus, systems and methods for testing a filter with a handheld scanning probe operably connected to a base unit. In the most preferred forms, the present invention is directed to apparatus, systems and methods for testing a filter in situ, i.e., the normal operating position of the filter. However, a filter system formed in accordance with an embodiment of the invention could be used to test filters at the manufacturing site or any other site in which the filter is not installed in an operating position.

One preferred form of the present invention significantly improves the process of testing a filter using a handheld scanning probe to scan the filter being tested by allowing the operator/user to erase, eliminate, disregard or discount that portion of a filter scan in which airborne particles are generated and detected by the handheld scanning probe that have nothing to do with the efficiency or leakage of the filter being tested.

This feature is particularly advantageous when during a filter scanning process, an operator using the handheld probe to scan a particular filter encounters a situation in which a condition is presented that will register a false failure of the filter being tested. For example, the operator may inadvertently hit or strike a portion of a bio safety cabinet housing the filter being tested or any other area surrounding the filter being tested that results in particles being generated and detected by the scanning probe that have nothing to do with the efficiency or effectiveness or leakage of the filter being tested that lead to a false finding or reading of a filter failure. Alternatively, during a filter scan, the operator or other individual in close proximity to the filter being tested may sneeze or cough generating particles detected by the scanning probe that have nothing to do with the efficiency or effectiveness or leakage of the filter being tested that lead to a false finding or reading of a filter failure. Various other events may generate airborne particles that are detected by the handheld scanning probe that have nothing to do with the efficiency or effectiveness or leakage of the filter being tested that lead to a false finding or reading of a filter failure.

A preferred form of the present invention includes a virtual or physical trim or rewind activation member or members that an operator and/or user can manipulate to eliminate, discount, erase or discard a predetermined portion of the filter scan (e.g., ten 10 seconds of the filter scan just prior to a user activating the trim or rewind member) including all scanning data associated with the predetermined portion of the filter scan to compensate for circumstances occurring during the predetermined portion of the filter scan in which airborne particles are generated and detected by the scanning probe that have nothing to do with the efficiency or leakage of the filter being tested during the predetermined portion of the filter scan while maintaining all scanning data for all portions of the filter scan other than the predetermined portion of the filter scan.

The trim or rewind activation member or members can be physical or virtual activation members on the handheld probe and/or the base unit.

In one preferred embodiment, all scanning data is collected after activation of the physical or virtual activation trim or rewind member or members on the handheld probe and/or the base unit so that inadvertent activation does not prejudice the completion of the filter scan. Specifically, in a preferred form of the invention, upon activation of the physical or virtual activation trim or rewind member or members on the handheld probe and/or the base unit, a pop-up window or other graphical interactive icon or element will be presented to the user/operator on the handheld probe and/or base unit asking the user/operator to cancel or confirm that the trim/rewind function is to be performed. In a preferred form, the system continues to collect all scan data subsequent to activation the trim or rewind member or members.

If the operator/user selects to cancel the rewind/trim function, the filter scan will proceed as if the trim/rewind function was never activated including recording all scan data subsequent to activation the trim or rewind member or members.

A preferred form of the system is configured such that where the filter system displays maximum filter leakage on the base unit and/or the handheld probe, if a maximum filter leakage occurs during the period from activation of the trim/rewind function and cancellation of the trim/rewind function, the maximum filter leakage during this period will be displayed on the handheld probe and/or base unit.

A preferred form of the system is configured such that where the operator/user confirms that the trim/rewind function is to be performed and the maximum leakage of the filter being scanned occurs during the time period to be discarded, erased, discounted or eliminated, the maximum leakage occurring immediately prior to the portion of the filter scan to be discarded, erased, discounted or eliminated will be displayed as the maximum leakage on the handheld probe and/or base unit.

A preferred form of the present invention includes replacing physical activation members on the handheld probe and/or the corresponding base unit with virtual activation members/icons/touch screen portions or sections.

Another preferred embodiment of the present invention includes methods, apparatus and systems in which one or more virtual icons that cannot be activated or are irrelevant to the current displayed interactive screen are not displayed on the current displayed interactive screen to the operator/user on the handheld probe or base unit or are automatically disabled when presented to the user.

A further preferred embodiment of the present invention includes methods, apparatus and systems configured to display in the same space, section or area of a screen or graphical user interface, multiple different activation icons having different functions (e.g., pause icon pausing the filter scan and start icon causing the scan to proceed). The detectable difference (e.g., background, shape or other differing characteristic) of one or more features of the displayed icons will dictate a particular action. For example, a first state of the filter system when the pause icon is activated will result in a particular functioning being performed and a second state of the filter system when the start icon is activated appearing in the same space on the display screen as the pause icon will result in another function, i.e., the system is able to detect differences in the state of the filter system when different activation members are activated and perform different functions due to the detected differences in the state of the filter system.

In a further preferred embodiment, the handheld probe is provided with a super capacitor to prevent loss of scanning data by providing the unit including the handheld probe sufficient time to store data and then shut down after the base unit has been disconnected from a power source, i.e., electrical outlet.

Another preferred embodiment, includes one or more interactive screens or graphical user interfaces having virtual icons that allow the user to perform functions that are relevant or related to a filter scan including: (i) setting or modifying security settings of the handheld probe like encrypting all files that are copied to an external storage device (e.g., USB stick or drive) connected to the handheld probe and password protecting any function or process in which password protection is desired (e.g., firmware updating, downloading or erasing date and entry or modifying the date and time).

### BACKGROUND OF THE INVENTION

Various devices have been used to test leakage of various filters employed in bio safety cabinets, pharmaceutical clean rooms, animal testing laboratories and nuclear environments. These devices have included photometers used in conjunction with aerosol generators to measure how well a filter is performing. Typically, an aerosol with a known concentration is introduced before or upstream of the filter and the photometer is operably connected to the downstream side of the filter to measure any leakage of the aerosol through the filter. Photometers typically utilize forward light scattering to measure any leakage of aerosol through the filter being tested.

Prior known devices can test both upstream and downstream samples. To test the upstream sample, a conduit is typically connected to a base unit with the open end of the conduit deployed upstream of the filter being tested. To test the downstream sample, prior known devices have used a handheld probe operably connected to the base unit. The probe is deployed on the downstream side of the filter and conveys the test sample back to the base unit to be processed to determine any leakage of aerosol through the filter.

Prior filter systems have been unable to allow the user to discard, eliminate or erase a portion of a filter scan where airborne particles are present and detected that never passed through the filter being tested but rather are due to other circumstance occurring during a filter scan. For example, the operator may inadvertently hit or strike a portion of a bio safety cabinet housing the filter being tested or any other area surrounding the filter being tested that results in particles being generated and detected by the scanning probe that have nothing to do with the efficiency or effectiveness or leakage of the filter being tested that lead to a false finding or reading of a filter failure. Alternatively, during a filter scan, the operator or other individual in close proximity to the filter being tested may sneeze or cough generating particles detected by the scanning probe that have nothing to do with the efficiency or effectiveness or leakage of the filter being tested that lead to a false finding or reading of a filter failure. Various other events may generate airborne particles that are detected by the handheld scanning probe that never passed through the filter being tested and, therefore, have nothing to do with the efficiency or effectiveness or leakage of the filter being tested that lead to a false finding or reading of a filter failure.

Also, prior handheld probes used in testing a filter in situ have physical activation members to allow the user to manipulate the functioning of the handheld probe and/or associated base unit before, during and after a filter scan. Due to size and weight constraints on handheld probes used to test filters in situ including filters in raised or elevated locations, the number of physical activations members on the handheld probe are or can be limited to prevent the handheld probe from being too large or too heavy.

Further, the display screens on prior handheld probe are small due to the need to have physical activation members on the handheld probe precluding presentation of numerous different graphical user interfaces having numerous different virtual interactive icons that can be activated merely be the user touching or tapping on a corresponding virtual interactive icon.

The prior art has other limitations and/or disadvantages that are overcome by preferred forms of the present invention.

### OBJECTS AND SUMMARY OF THE INVENTION

An object of a preferred embodiment of the present invention is to provide a novel and unobvious apparatus and/or process for testing filters.

Another object of a preferred embodiment of the present invention is to provide an apparatus for testing a filter in situ, i.e., the normal operating position of the filter.

A further object of a preferred embodiment of the present invention is to provide a handheld scanning probe and/or base unit configured to allow an operator/user to erase, eliminate, disregard or discount that portion of a filter scan (i.e., 10 seconds of a filter scan of an approximately five (5) minute filter scan for a 4' x 2' filter or 2.5 minutes of a filter scan for a 2' x 2' filter) in which airborne particles are generated and detected by the handheld scanning probe that have nothing to do with the efficiency or leakage of the filter being tested (e.g., airborne particles that never pass through the filter being tested).

Still another object of a preferred embodiment of the present invention is provide a handheld probe and/or base unit with a virtual or physical trim or rewind activation member or members that an operator and/or user can manipulate to eliminate, discount, erase or discard a predetermined portion of the filter scan (e.g., ten (10) seconds of the filter scan just prior to a user activating the trim or rewind member) including all scanning data associated with the predetermined portion of the filter scan to compensate for circumstances occurring during the predetermined portion of the filter scan in which airborne particles are generated and detected by the scanning probe that have nothing to do with the efficiency or leakage of the filter being tested during the predetermined portion of the filter scan while maintaining all scanning data for all portions of the filter scan other than the predetermined portion of the filter scan.

Still a further object of a preferred embodiment of the present invention is provide a filter testing system configured so that any and all scanning data is collected after activation of the physical or virtual activation trim or rewind member or members on the handheld probe and/or the base unit so that inadvertent activation does not prejudice the completion of the filter scan.

Yet still a further object of a preferred embodiment of the present invention is to provide a filter testing system configured such that upon activation of the physical or virtual activation trim or rewind member or members on the handheld probe and/or the base unit, a pop-up window or other graphical interactive icon will be presented to the user/operator on the handheld probe and/or base unit asking the user/operator to cancel or confirm that the trim/rewind function is to be performed and if the operator selects cancel, the filter scan will proceed as if the trim/rewind function was never activated including recording all scan data subsequent to activation of the trim or rewind member or members.

Yet another object of a preferred embodiment of the present invention is to provide a filter testing system configured such that configured if a maximum filter leakage occurs during the period from activation of the trim/rewind function and cancellation of the trim/rewind function, the maximum filter leakage during this period will be displayed on a display of the handheld probe and/or base unit.

Still a further object of a preferred embodiment of the present invention is to provide a system for testing a filter configured such that where the operator/user confirms that the trim/rewind function is to be performed and the maximum leakage of the filter being scanned occurs during the time period to be discarded, erased, discounted or eliminated, the maximum filter leakage occurring immediately prior to the portion of the filter scan to be discarded, erased, discounted or eliminated will be displayed as the maximum leakage on the handheld probe and/or base unit.

Another object on one preferred embodiment of the present invention is to provide a filter test system in which all physical activation members previously present on a handheld probe and/or a corresponding base unit with the sole exception being the on/off physical activation member of the base unit are replaced with virtual interactive activation members/icons/touch screen portions or sections presented on the display of the handheld probe and/or base unit.

A further object on one preferred embodiment of the present invention is to provide a filter test system in which one or more virtual icons that cannot be activated or are irrelevant to the current displayed interactive screen are not displayed on the current displayed interactive screen to the operator/user on the handheld probe and/or base unit or are automatically disabled when presented to the user.

Yet another object of one preferred embodiment of the present invention is to provide a filter test system configured to display in the same space, section or area of a screen or graphical user interface, multiple different activation icons having different functions (e.g., pause icon pausing the filter scan and start icon). A detectable difference (e.g., background or shape or other distinguishing characteristic) of one or more features of the displayed icons will dictate a particular action.

Still a further object of one preferred embodiment of the present invention is to provide a filter test system in which the handheld probe does not have any physical activation members but rather all activations that a user can activate on the handheld probe are virtual activation members presented on an interactive screen(s) or graphical user interface(s).

Yet still a further object of one preferred embodiment of the present invention is to provide a filter test system in which the handheld probe is provided with a super capacitor to prevent loss of scanning data when moving the filter system from one electrical outlet to another electrical outlet.

Yet another object of one preferred embodiment of the present invention is to provide a filter test system configured to display on the handheld probe and/or base unit one or more interactive screens or graphical user interfaces having virtual icons that allow the user to perform functions that are relevant or related to a filter scan including: (i) setting or modifying security settings of the handheld probe like encrypting all files that are copied to an external storage device (e.g., USB stick or drive) connected to the handheld probe and password protecting any function or process in which password protection is desired (e.g., firmware updating, downloading or erasing date and entry or modifying the date and time).

It must be understood that no one embodiment of the present invention need include all of the aforementioned objects of the present invention. Rather, a given embodiment may include one or none of the aforementioned objects. Accordingly, these objects are not to be used to limit the scope of the claims of the present invention.

In summary, one or more preferred embodiments of the present invention includes features recited in the above recitation of objects of preferred forms of the present invention. Further, those skilled in the art will readily realize other features described herein are novel and unobvious. Accordingly, the presented claims are not to be construed as the only inventive features of the subject patent application. Rather, the scope of the invention disclosed herein is only to be limited by the prior art, i.e., any subject matter disclosed herein that has not been claimed is not to be construed as lacking invention (i.e., novel and unobvious).

### BRIEF DESCRIPTION OF THE DRAWINGS

**FIGURE 1** is a perspective view illustrating a prior art handheld filter scanning probe.
**FIGURE 2** is a fragmentary cross-sectional view of the prior art probe illustrated in Figure 1.
**FIGURE 3** is a perspective view illustrating the opposing side of the prior art probe depicted in Figure 1.
**FIGURE 4** is a fragmentary perspective view of a portion of the prior art probe depicted in Figure 1.
**FIGURE 4A** is a fragmentary perspective view of a portion of a preferred form of a handheld filter scanning probe of the present invention.
**FIGURE 5** is a front view of a conventional connector for connecting a handheld filter scanning probe to a conventional base unit.
**FIGURE 6** is a perspective view of a prior art base unit with a portion of the housing of the base unit removed.
**FIGURE 7** is a perspective view of another preferred form of handheld filter scanning probe.
**FIGURE 8** is a partially exploded perspective view of the handheld probe depicted in Figure 7.
**FIGURE 9** is a partially exploded perspective view of internal portions of the handheld probe of Figure 7.
**FIGURE 10** is a perspective view of internal portions of the handheld probe of Figure 7.
**FIGURE 11** is a perspective view of a portion of the probe depicted in Figure 7 with internal portions shown as being removed from but next to a body portion of the handheld probe.
**FIGURE 12** depicts the preferred interactive screens or graphical user interfaces which are or can be displayed on the display of the handheld probes depicted in Figures 4a and 7 when the 100% response level of a corresponding base unit is set or determined by measuring upstream concentration.
**FIGURE 13** depicts the preferred interactive screens or graphical user interfaces which are or can be displayed on the display of the handheld probes depicted in Figures 4a and 7 when the 100% response level of a corresponding base unit is manually set by the user.
**FIGURE 14** depicts the preferred interactive screen or graphical user interface which is or can be displayed on the display of the handheld probes depicted in Figures 4a and 7 when the 100% response level of a corresponding base unit is manually set to a previous 100% response level.
**FIGURE 15** depicts a preferred interactive alarm setting screen or graphical user interface which is or can be displayed on the display of the handheld probes depicted in Figures 4a and 8 when a user activates the "Alarm" virtual icon to enable or disable any or all available alarms (i.e., audible, vibratory and/or visual).

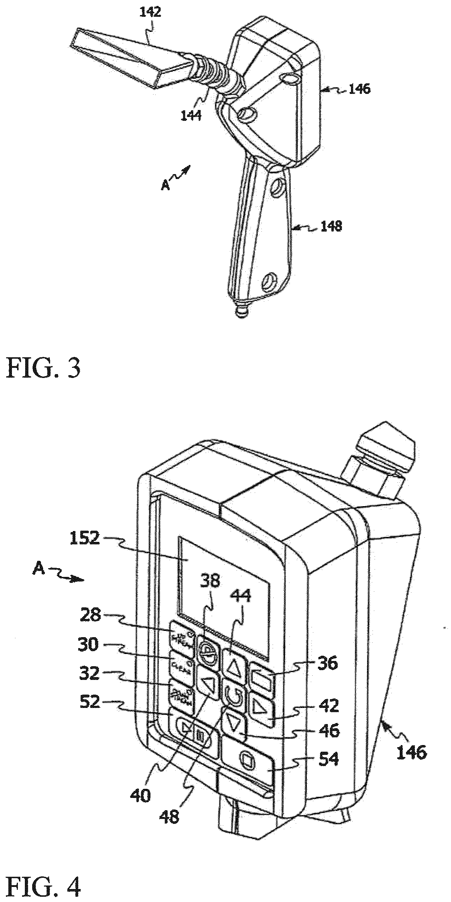

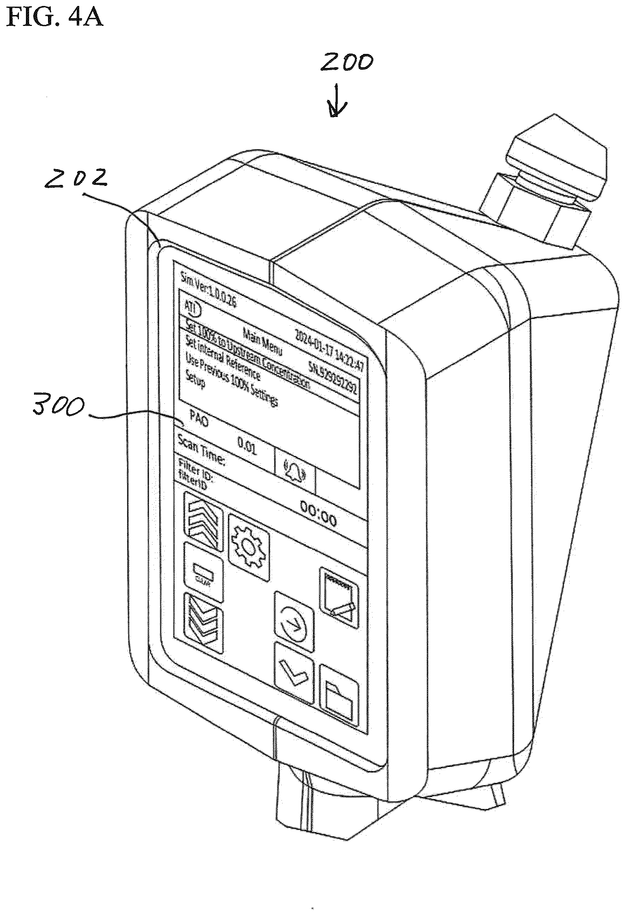

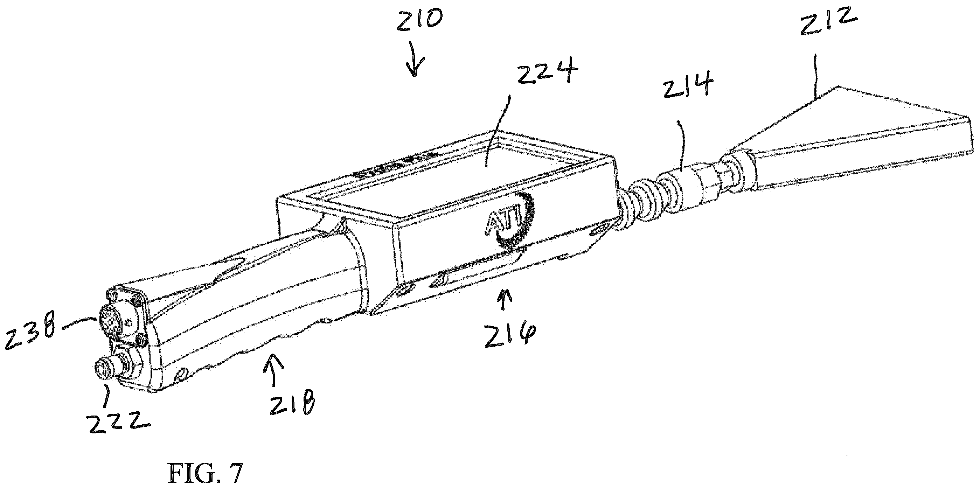

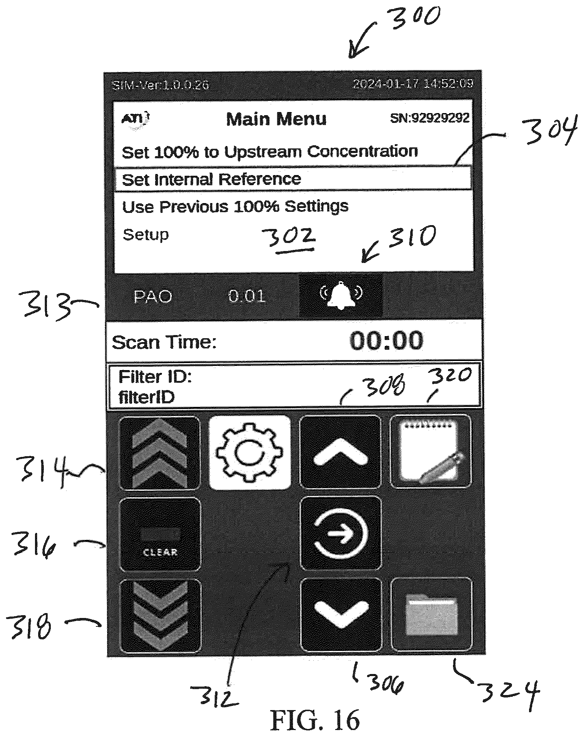

**FIGURE 16** depicts the preferred interactive initial screen or graphical user interface which is or can be displayed on the display of the handheld probes depicted in Figures 4a and 7 with the "Set Internal Reference" being selected using a corresponding directional arrow. In this figure, both the down and up directional arrows of the possible directional arrows that can be displayed (i.e., up directional arrow, down directional arrow, left directional arrow and right directional arrow) are displayed as the up and down directional arrows are both operable due to selection of the "Set Internal Reference".
**FIGURE 17** depicts the preferred interactive information entry screen or graphical user interface which is or can be displayed on the display of the handheld probes depicted in Figures 4a and 7 when the "Pad and Pencil" virtual icon is activated on any screen (e.g., initial screen) having the "Pad and Pencil" virtual icon.
**FIGURE 18** depicts the preferred interactive information entry screen or graphical user interface which is or can be displayed on the display of the handheld probes depicted in Figures 4a and 7 with a virtual information entry keyboard displayed on a lower portion of the screen due to a user touching the box appearing directly below "Job ID:".

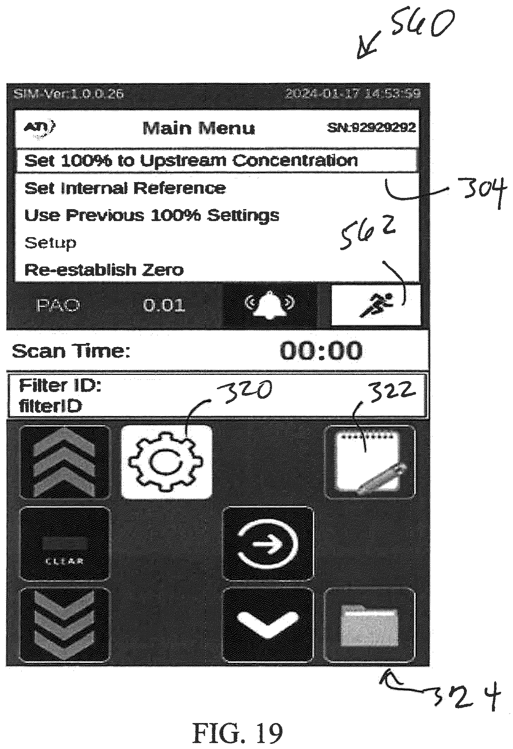

**FIGURE 19** depicts a preferred interactive home screen or graphical user interface that is or can be displayed on the display of the handheld probes depicted in Figures 4a and 7 when the "House" virtual icon is activated on any screen having the "House" virtual icon. In this figure, only the down directional arrow of the possible directional arrows that can be displayed (i.e., up directional arrow, down directional arrow, left directional arrow and right directional arrow) is displayed as it is the only directional arrow that is operable (i.e., that can perform a function associated with the down direction arrow) on this screen due to the selection box surrounding the "Set 100% to Upstream Concentration."
**FIGURE 20** depicts the preferred interactive screen or graphical user interface which is or can be displayed on the display of the handheld probes depicted in Figures 4a and 7 when a user activates the "Folder" virtual icon.
**FIGURE 21** depicts the preferred interactive screen or graphical user interface which is or can be displayed on the display of the handheld probes depicted in Figures 4a and 7 to allow a user to start a filter scan.
**FIGURE 22** depicts the preferred interactive screen or graphical user which is or can be displayed on the display of the handheld probes depicted in Figures 4a and 7 during a filter scan when data is being recorded.
**FIGURE 23** depicts the preferred interactive screens or graphical user interfaces which are or can be displayed on the display of the handheld probes depicted in Figures 4a and 7 during a filter scan to pause a filter scan and subsequently restart the filter scan.
**FIGURE 24** depict the preferred interactive screen or graphical user interface which is or can be displayed on the display of the handheld probes depicted in Figures 4a and 7 to activate the trim or rewind feature of a preferred form of the present invention.
**FIGURE 25** depicts a portion of the interactive screen or graphical user interface with a pop-window that is automatically displayed upon activation of the trim or rewind feature.
**FIGURES 26** **AND 27** depict flow charts explaining the trim or rewind feature of a preferred form of the present invention.
**FIGURE 28** depicts the preferred interactive screens or graphical user interfaces which are or can be displayed on the display of the handheld probes depicted in Figures 4a and 7 to allow a user to complete a filter scan and enter any comments on the completed filter scan.
**FIGURE 29** depict the preferred interactive screens or graphical user interfaces which are or can be displayed on the display of the handheld probes depicted in Figures 4a and 7 allowing the user to activate the "Admin" virtual icon and subsequently to set or update security settings of the filter system.
**FIGURE 30** depicts the preferred interactive screen or graphical user interface which is or can be displayed on the display of the handheld probes depicted in Figures 4a and 7 when a user activates the "Folder" virtual icon and no external storage is connected to the handheld probe at the time of activation of the "Folder" virtual icon.

### DETAILED DESCRIPTION OF THE PREFERRED

### EMBODIMENT OF THE INVENTION

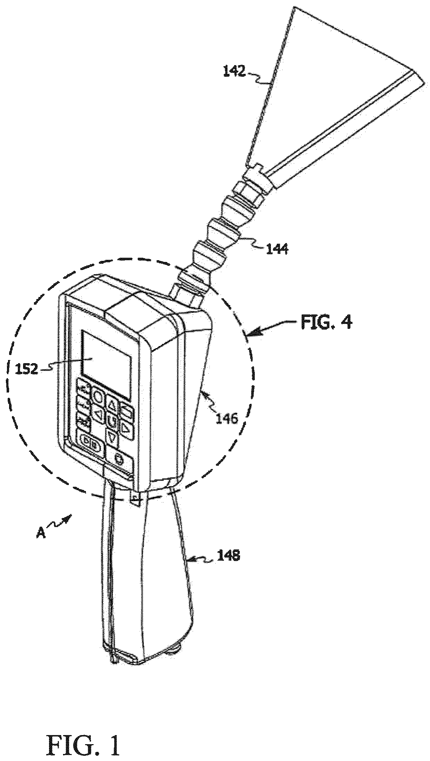

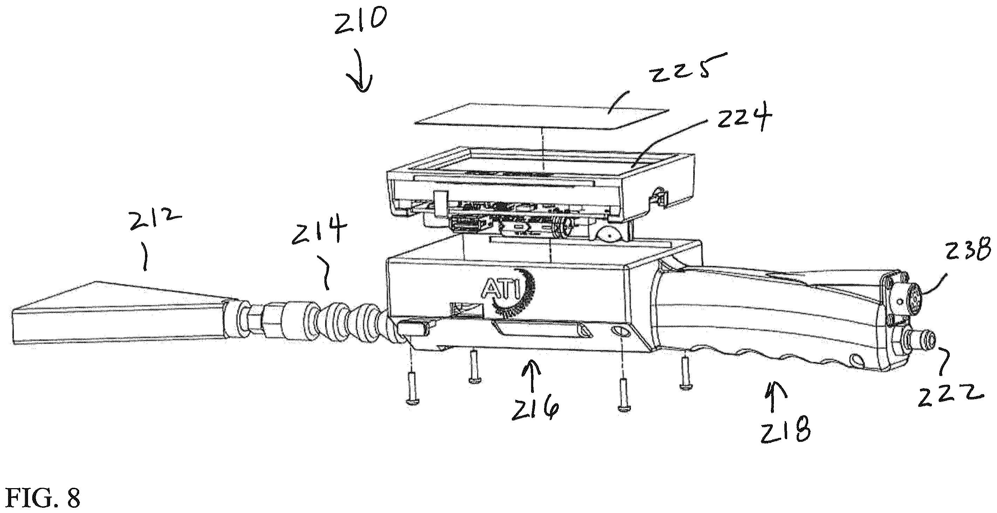

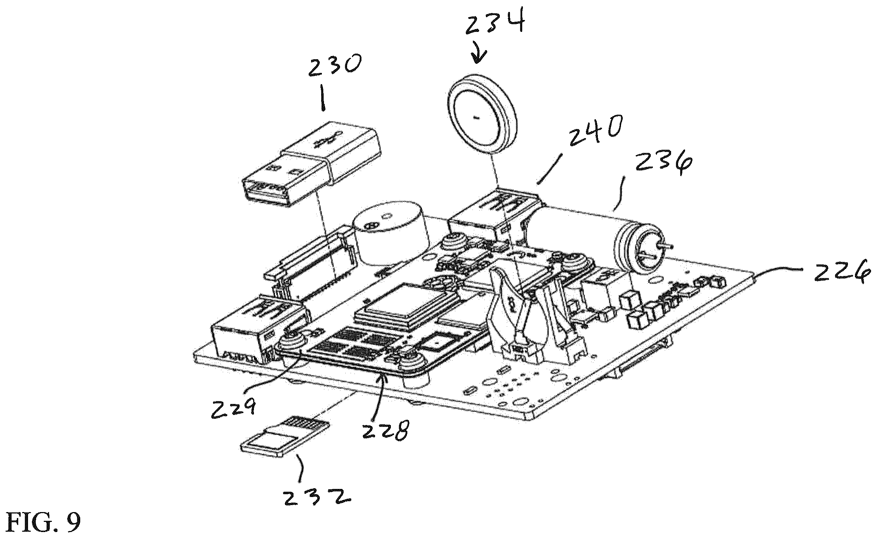

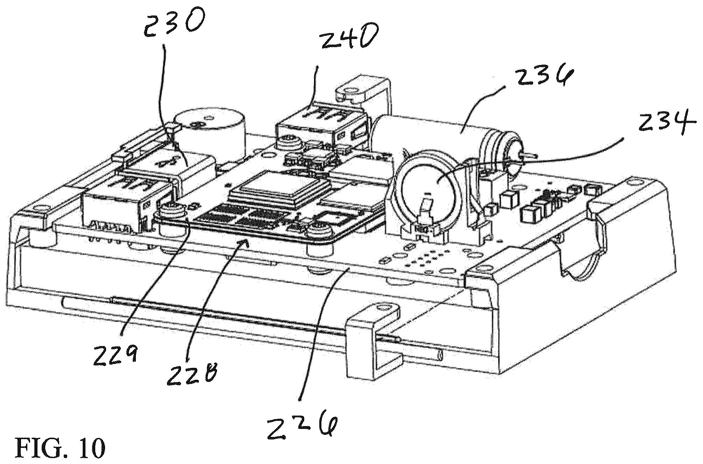

The most preferred forms of the invention will now be described with reference to **FIGS. 1** to **30**. The appended claims are not limited to the most preferred embodiments and no term used herein is to be given a meaning other than its ordinary meaning unless expressly stated otherwise.

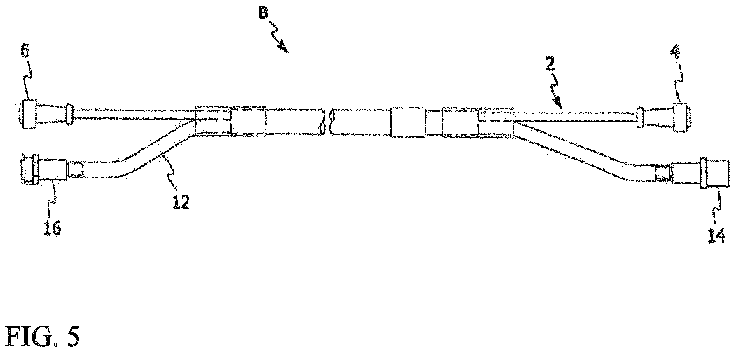

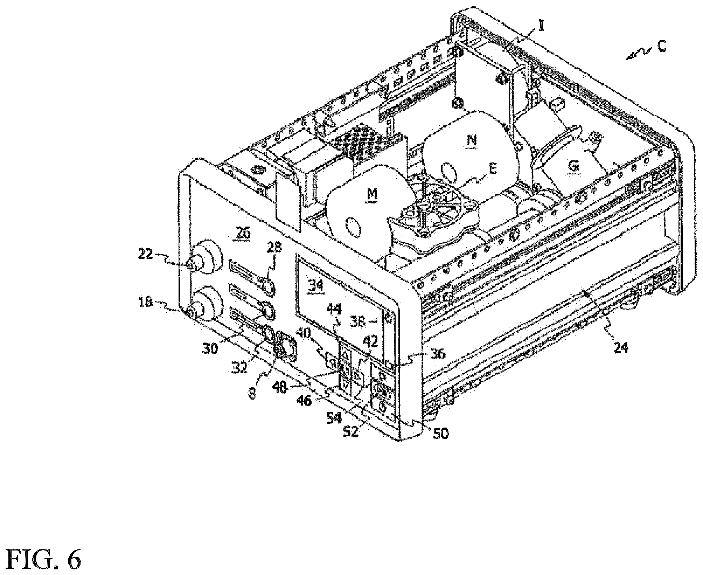

Figures 1 to 4, 5 and 6 depict components of the filter testing system disclosed in U.S. Patent No. 9,772,271. The entire contents of U.S. Patent No. 9,772,271 are incorporated herein by reference. Figures 1 to 4 illustrate the handheld probe A disclosed in U.S. Patent No. 9,772,271. Figure 6 illustrates the base unit disclosed in U.S. Patent No. 9,772,271. Figure 5 illustrates a connector for connecting the handheld probe to the base unit disclosed in U.S. Patent No. 9,772,271.

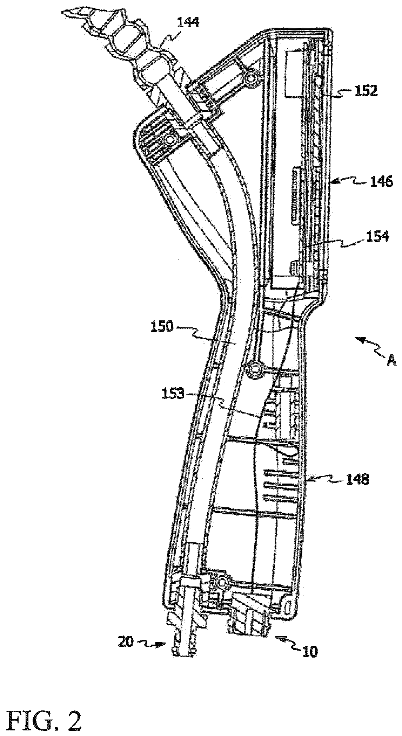

Referring to Figures 1 to 4, handheld probe A includes a test sample collection nozzle or head **142,** a hollow, adjustable arm **144,** a main body **146** and a handle **148.** Arm **144** is in fluid tight communication with nozzle or head **142** and allows an operator to adjust the position of head **142.** A conduit **150** (see figure 2) connects arm **144** to downstream test sample port **20** extending from the bottom of handle **148.** Main body **146** includes a display screen **152,** a circuit board **154** having a microprocessor and a plurality of control members. An electrical connector **153** connects the circuit board **154** to electrical connection port **10** extending from the bottom of handle **148.** As seen in figures 2 and 5, electrical connectors **2** and **153** connect circuit board **154** to main circuit board in base unit **C.** Probe **A** has many of the same control members as the base unit **C** (see Figure 6). The same reference numerals have been used to designate the same control members for base unit **C** and handheld probe **A.** Referring to figure 4, main body **146** includes control members **28, 30, 32, 36, 38, 40, 42, 44, 46, 48, 52** and **54** the functions of each of these control members is explained in U.S. Patent No. 9,772,271.

Referring to Figure 6, base unit C includes a housing 24 having a frame 25, a front panel **26,** a rear panel, a bottom panel and a cover panel (not shown). The cover panel preferably includes a handle. Housing **24** houses a manifold and valve assembly, dual headed vacuum pump **E,** a vacuum pump power supply, photometer **G,** a flow meter assembly, fan **I,** a power entry module, an interface board, a main circuit board **L** having a microprocessor, clean air filter **M** and exhaust air filter **N.**

Referring to figure 6, electrical connection port **8,** downstream test sample port **18** and upstream test sample port **22,** extend outwardly from front panel **26.** Front panel **26** preferably includes three control members **28, 30** and **32.** Base unit **C** will test an upstream sample when control member **28** is activated by an operator depressing this control member. Base unit **C** will test a downstream test sample when control member **32** is activated by an operator depressing this control member. When control member **30** is depressed by an operator, residual test samples in the base unit **C** will be exhausted from the filter testing system.

Front panel **26** further includes an LCD display screen **34** for displaying the operating menu of the filter testing system as well as the results of the filter test. Front panel **26** also includes control members **36** and **38.** Upon depression of control member **36,** an alpha-numeric keyboard or pad will be displayed on screen **34.** Control member **38** allows an operator to disable the audible alarm feature of the filter test system if desired, i.e., by depressing control member **38** the audible alarm that would typically sound when a filter has failed the test will be disabled. Front panel **26** includes cursor directional control members **40**, **42, 44** and **46** which allow an operator to move a cursor left, right, up and down on screen **34,** respectively. Control member **48** is also provided on front panel **26.** Control member **48** acts as an enter key. Using control members **40** through **48,** an operator may readily navigate through the alpha-numeric keyboard and the menu to enter information regarding a filter being tested or select various features available in the menu. Front panel **26** further includes control members **50, 52** and **54.** Upon depression of control member **50** the base unit will power up. By pressing the arrow portion of control member **52,** the filter testing system will perform the test selected by the operator. By pressing the two parallel vertical lines portion of control member **52,** the test being performed will be paused. To continue the filter test, the arrow portion of control member is depressed. By depressing control member **54,** the test is stopped. The operation of the base unit C and the components thereof including those discussed briefly above is explained in U.S. Patent No. 9,772,271.

As seen in Figure 5, coupling assembly **B** includes an electrical coupler **2** having electrical connectors **4** and **6** disposed at opposite ends. When probe **A** is to be used with the base unit **C** to test a filter, connector **4** is coupled to electrical connection port **8** (see figure 6) of base unit **C** and connector **6** is coupled to electrical connection port **10** (see figure 2) of probe **A.** Coupling assembly **C** further includes a fluid conduit **12** having connectors or couplers **14** and **16** disposed at opposite ends. Connector **14** is coupled to downstream test sample port **18** (see figure 6) of base unit **C** while connector **16** is coupled to downstream test sample port **20** (see figure 2) of probe **A.** A conduit (not shown) similar to fluid conduit **12** may be used to convey a test sample (preferably aerosol) upstream of the filter being tested into the base unit **C** through upstream test sample port **22** for testing of the upstream test sample.

Figure 4A illustrates a handheld probe **200** of a preferred embodiment of the present invention in which all physical control members **28, 30, 32, 36, 38, 40**, **42, 44, 46, 48, 52** and **54** of probe **A** have been removed. The display screen, area or section **202** has been significantly enlarged from the display screen, area or section **152** of the handheld probe **A** disclosed in U.S. Patent No. 9,772,271. For example, display **202** of handheld probe **200** encompasses, *inter alia,* the area previously occupied by the physical control members **28, 30, 32, 36, 38, 40, 42, 44, 46, 48, 52** and **54** of the handheld probe **A.** In a most preferred embodiment, handheld probe **200** is configured to be used with base unit **C** disclosed in U.S. Patent No. 9,772,271 without any modification of the base unit **C.**

Because of the nature of the communications between probe **200** and base unit C, the activation of arrow keys **40**, **42, 44** and **46** and enter button **48** of base unit **C** is mirrored by probe **200**. For example, items that are selectable in the top half of the various graphical user interfaces displayed on the display screen **202** are accessed via the virtual arrow keys and virtual enter button presented on screen **202** of probe **200**. However, the mirroring can be "masked" in those instances where only one choice is selectable. Items in the bottom half of various graphical user interfaces displayed on the display screen **202** preferably act as a typical touchscreen, as they represent either physical buttons on probe **A** which can be pressed at any time or buttons that are new to probe **200**.

The same coupling assembly **B** or a similar coupling assembly can be used to connect probe **200** to base unit **C.**

A preferred embodiment of the present invention includes a base unit in which all physical control members of base unit **C** are replaced with virtual activation icons activated by touching a corresponding portion of the graphical user interface displayed on display screen 34. In another preferred embodiment, all physical control members of the base unit **C** are replaced with virtual activation icons with the sole exception of a physical "on/off" button or control member (e.g., power button **50** depicted in Figure 6).

In those instance where probe **200** is used with a new (i.e., a base unit specifically configured for probe **200**) rather than an existing base unit (e.g., base unit **C),** any interactive portion of the various graphical user interfaces displayed on the display screen **202** can be activated merely by touching a corresponding portion of the displayed graphical user interface.

Referring to Figures 7 to 11, another preferred form of handheld probe **210** will now be described. Probe **210** as described below is configured to be connected to base unit C without altering base unit C. Accordingly, the above discussion of mirroring aspects of probe **200** to base unit C is applicable to probe **210.** Like probe **200,** probe **210** can be used with a new rather than an existing base unit and as such can be configured so that any interactive portion of the various graphical user interfaces displayed on the display screen of probe **210** can be activated merely by touching a corresponding portion of the displayed graphical user interface.

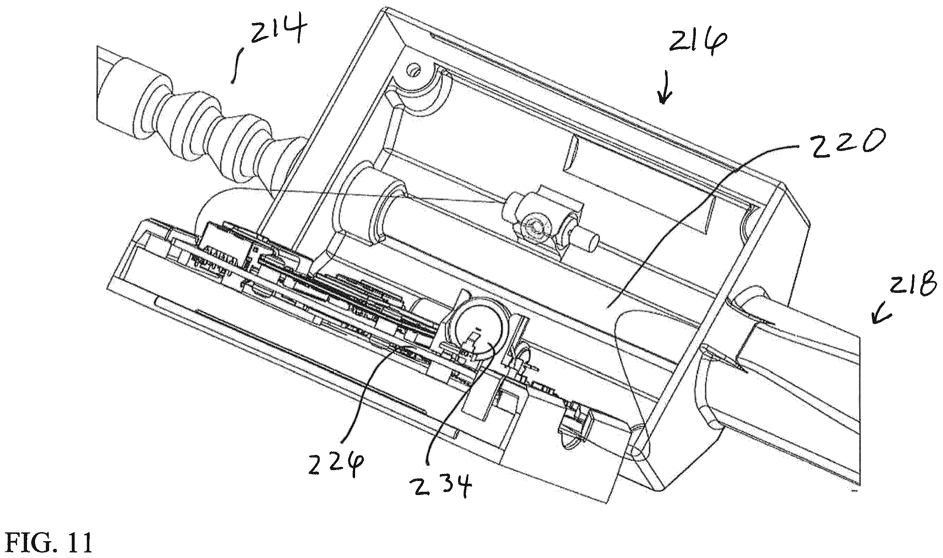

Handheld probe **210** includes a test sample collection nozzle or head **212,** a hollow, adjustable arm **214,** a main body **216** and a handle **218.** Arm **214** is in fluid tight communication with nozzle or head **212** and allows an operator to adjust the position of head **212.** A conduit **220** (see figure 11) connects arm **214** to downstream test sample port **222** extending from the bottom of handle **218.**

Main body **216** includes a display screen **224,** a transparent display screen protective layer **225,** a circuit board **226,** a computer **228** including a microprocessor **229** (e.g., Raspberry Pi processor), an internal USB **230,** a mini or micro SD card **232,** a battery **234** and a super capacitor **236.** One or more electrical connectors of any suitable type connect the circuit board **226** to electrical connection port **238** extending from the bottom of handle **218.** Electrical connector **2** of coupling assembly **B** may be used to electrically connect probe **210** to the main circuit board in base unit **C.** However, any probe **210** may be electrically connected to the base unit **C** using any suitable connector or connectors. Socket **240** is provided to connect an external USB stick or drive (not shown) to circuit board **226** to, for example, download scan data.

The internal USB **230** can store computer software code, scan data and other data associated with a filter test or scan. The mini SD card **232** can store computer code and one or more operating systems (e.g., Linux operating system). Computer **228** runs the operating system or systems including the touch screen program. Battery **234** powers the real time clock of the handheld probe **210.** Super capacitor **236** holds charge to keep the computer running for a predetermined time (e.g., 20 seconds) after the base unit has been disconnected from a power source (e.g., power outlet). While a super capacitor is described as a preferred means to keep the computer running, any other suitable device could be used (e.g., a battery). Furthermore, the handheld probe need not include any means including, but not limited to, the super capacitor to keep the computer running after the base unit has been disconnected.

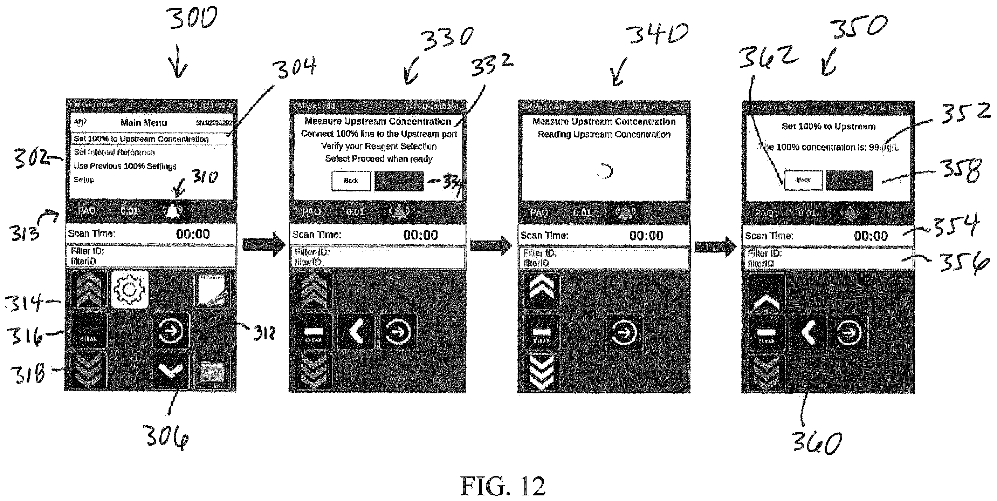

Referring to Figures 12 to 30, a preferred operation of the filter system formed in accordance with the present invention will be described. Once the base unit is connected to a power source (e.g., plugging in base unit C to a power outlet) and the handheld probe (either probe **200** or probe **210)** is connected to the base unit using coupling assembly **B** or a similar coupling assembly, an initial or start interactive screen **300** will be displayed on the display of the handheld probe. This is seen in Figure 4A depicting screen **300** populating display **202** of probe **200**. Start or initial interactive screen **300** is also shown in Figures 12 to 14 and 16. All other interactive screens or graphical user interfaces will or can be displayed on the display of the handheld probe. While the interactive screens or graphical user interfaces described below allow the user to perform numerous functions from a given user interface, any or all of the user interfaces described below can be simplified where desired.

Start screen **300** includes an upper section **302** from which a user can select one of three ways to designate the value of the upstream aerosol concentration that represents the 100% Concentration of the upstream aerosol. The three ways are: (i) measuring the upstream concentration ("Set 100% to Upstream Concentration" item of screen **300**); (ii) manually setting the 100% Concentration ("Set Internal Reference" item of screen **300**); and, (iii) using a previously set value for the 100% Concentration ("Use Previous 100% Settings" item of screen **300**). Interactive directional arrow icons allow the user to select one of the three different ways to designate the value of the upstream aerosol concentration that represents the 100% Concentration of the upstream aerosol. As is seen in Figure 12, the first of the three ways has been selected, i.e., "Set 100% to Upstream Concentration" as it is surrounded by box **304**. Start screen **300**, in Figure 12, only includes a downward directional arrow interactive icon **306** as selecting box **304** can only be moved downward in area **302** due to box **304** surrounding "Set 100% to Upstream Concentration" in Figure 12. Displaying only the directional arrow or arrows interactive icons that can be activated by a user reduces the likelihood that a user attempts to activate an icon having a function which serves no purpose or cannot be performed on a particular interactive screen or graphical user interface.

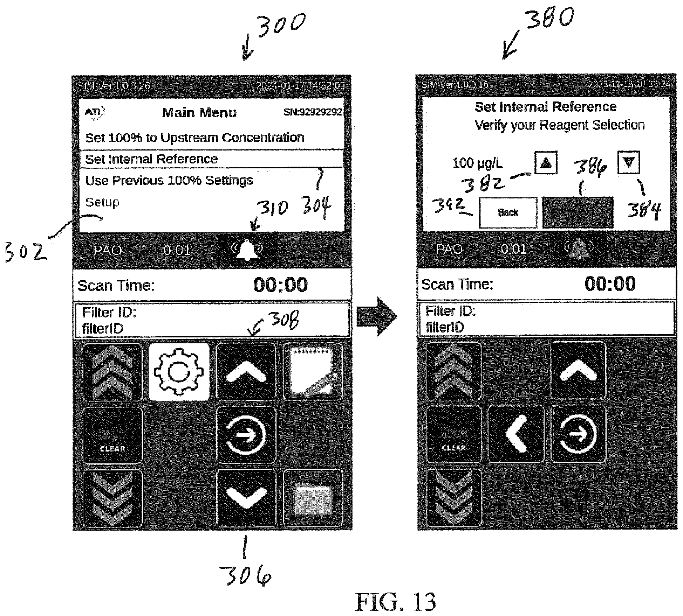

In Figure 13, the second way (i.e., "Set Internal Reference") has been selected and both upward directional arrow interactive icon **308** and downward arrow interactive icon **306** appear on screen **300** as the user can move upwardly or downwardly box **304** to change the way or manner of designating the value of the upstream aerosol concentration that represents the 100% Concentration of the upstream aerosol. "Setup" in section **302** is greyed out as it cannot be activated but needs to appear in section **302** to mirror base unit **C.**

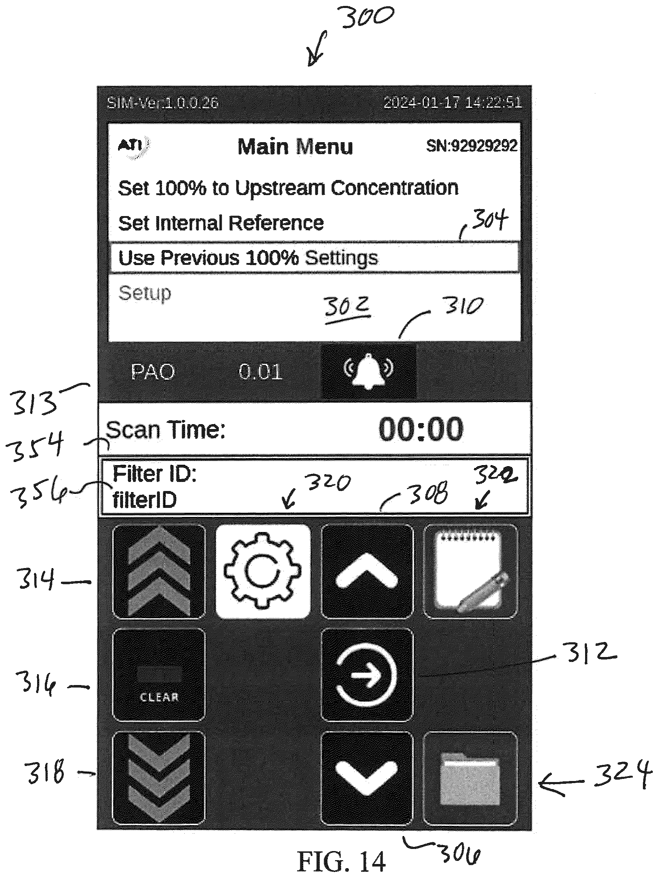

Icon **306** also allows the user to select and activate alarm setting icon **310** the function of which will be explained below. For example, in screen **300** as depicted in Figure 14, the user touches icon **306** twice to highlight icon **310** which can be activated by touching or tapping on enter icon **312** once icon **310** is highlighted.

The horizontally extending section **313** of screen **300** identifies the reagent (e.g., PAO) and alarm set point (e.g., 0.01) along with alarm setting icon **310.** The reagent and alarm set point are not active on screen **300**. Screen **300** also includes upstream graphical representation **314,** clear mode graphical representation **316** and downstream graphical representation **318** none of which are active on screen **300**. Clear mode graphical representation **316** can be animated to inform the user that base unit **C** is the clear mode when screen **300** is displayed. For example, the animation could take the form of greying out elements **314** and **318** without greying out element **316.** Any other manner of animation may be used to inform the user that the base unit **C** is in the clear mode when screen **300** is displayed.

Screen **300** further includes Admin interactive icon **320**, pad and pencil interactive icon **322** and file folder interactive icon **324** each of which can be activated by merely touching the icon that the user wants to activate.

Touching icon **312** when box **304** appears around the first option ("Set 100% to Upstream Concentration") will cause screen **330** (see Figure 12) to populate the display of the handheld probe. Screen **330** can include a message **332** to the user to connect a 100% line directly to upstream port **22** of base unit C. When screen **330** is initially displayed to the user the "Proceed" box **334** is highlighted. If icon **312** is activated by touching or tapping on icon **312** when the "Proceed" box **334** is highlighted, screen **340** will populate the display of the handheld probe indicating that the upstream concentration is being read/measured. Once the upstream concentration has been determined, screen **350** will populate the display of the handheld probe. Screen **350** can include a message **352** (e.g., "The 100% concentration is: 99µg/L informing the user of the 100% concentration (e.g., 99 µg/L).

As seen in Figure 12, screens **300**, **330**, **340** and **350** all include a filter scan time section **354** and a filter ID section **356.** The filter scan section **354** identifies the current time period of the filter scan. As the filter scan has not started, the Scan Time appears as "00:00". The filter ID section **356** identifies the filter being scanned by, for example, a unique filter identification designation.

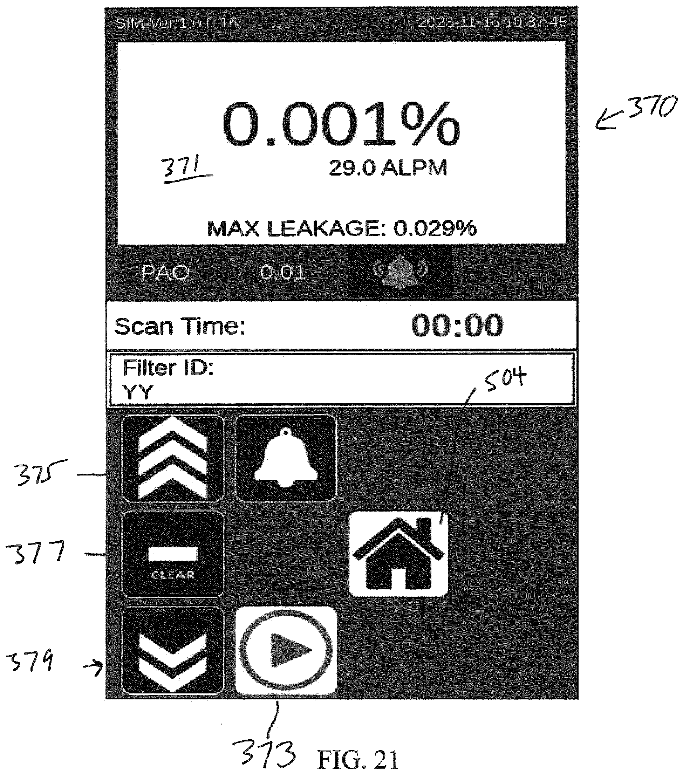

When screen **350** is initially presented to the user, the "Proceed" box **358** is highlighted so that a user can perform the function associated with this box by touching icon **312.** When the "Proceed" box **358** is highlighted and the user touches icon **312,** stand by screen **370** (see Figure 21) populates the display of the handheld probe.

Screen **350** also includes only the left directional arrow interactive icon **360** which when activated highlights the "Back" box **362** as this is the only type of directional arrow that can perform a function on screen **350**. When the "Back" box **362** is highlighted and the user touches icon **312,** screen **300** will populate the display of the handheld probe if screen **350** was reached by a user interacting with screen **300**.

Referring to Figure 13, when selection box **304** is around the second option (i.e., "Set Internal Reference") in section **302** of screen **300** and the user touches icon **312,** screen **380** (see Figure 13) will populate the display of the handheld probe. Screen **380** includes interactive adjustment members **382** and **384** that allow a user to adjust the 100 µg/L 100% concentration upwardly (icon **382)** or downwardly (icon **384)** to set the 100% concentration desired by the user by touching either icon **382** and/or icon **384.** Once adjusted to the desired 100% concentration and with the "Proceed" box **386** highlighted as shown in Figure 13 the user can touch icon **312** and the selected reference value is communicated to the base unit, which makes the necessary adjustments and then the continuous reading on a given interactive screen will reflect those selected settings. Directional arrow icons can be provided on screen **380** to allow the user to move around in the Set Internal Reference box of screen **380**. Left directional arrow icon **360** once touched by the user, will move from the highlighted "Proceed" box **386** in Figure 13 to highlight the "Back" box **392** on screen **380.** When the "Back" box **392** is highlighted and the user touches icon **312,** screen **300** will populate the display of the handheld probe. Only left and up directional arrow icons appear on screen **380** when the "Proceed" box 386 is highlighted as these are the only directional arrows that can perform a function when screen **380** is as depicted in Figure 13.

Referring to Figure 14, when box **304** is around the third option (i.e., "User Previous 100% Settings") in section **302** of screen **300** and the user touches or taps on icon **312,** the 100% concentration is set at the previous 100% concentration setting and stand by screen **370** (see Figure 21) populates the display of the handheld probe.

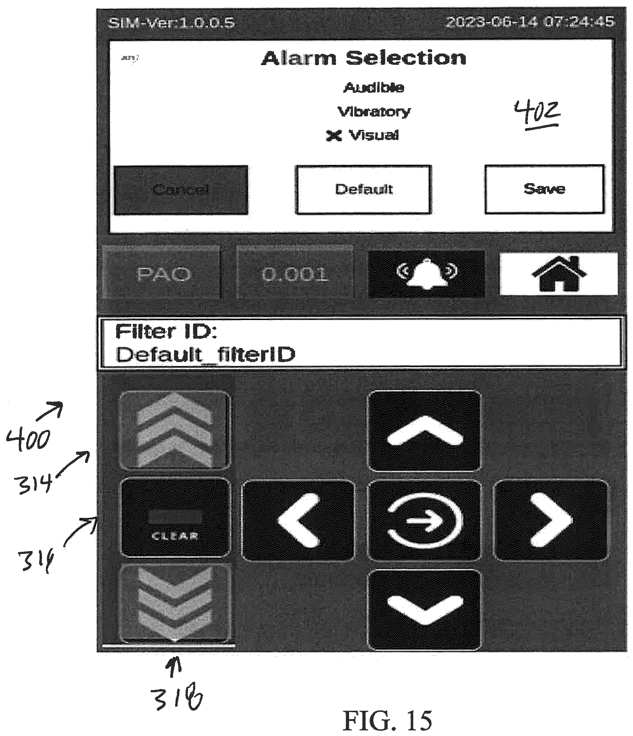

Referring to Figures 12, 13 and 15, when alarm icon **310** of screen **300** is highlighted by user manipulation of one or more directional arrows and the user touches icon **312,** screen **400** populates the display of the handheld probe. As seen in Figure 15, directional arrow interactive icons are displayed in the lower portion of screen **400** to allow the user to move around in the alarm selection box **402** to set or change the alarm settings for the audible alarm, vibratory alarm and the visual alarm by highlighting individual one or more of the audible alarm, vibratory alarm and the visual alarm and touching icon **312.** Also, "Cancel" "Default" and "Save" boxes in the alarm selection box **402** can be highlighted by using a corresponding directional arrow icon. Touching icon **312** when the "Cancel" box is highlighted will return to the previously displayed screen with no changes to the alarm settings. Touching icon **312** when the "Default" box is highlighted will return to the prior displayed screen with the three alarm settings (i.e., the audible alarm, vibratory alarm and the visual alarm) set to the default setting for each of the three alarm settings. Touching icon **312** when the "Save" box is highlighted will return to the prior displayed screen with the alarm setting as modified by the user manipulating screen **400**. For example, screen **400** has only the visual alarm activated as indicated by the "X" appearing to the left of the visual alarm line in box **402**. Highlighting the "Save" box using the right directional arrow interactive icon and touching icon **312** of screen **400** will adjust any prior alarm settings to only a visual alarm and the prior screen will populate the display of the handheld probe.

Screen **400** can include also includes upstream graphical representation **314,** clear mode graphical representation **316** and downstream graphical representation **318** none of which are active on screen **400** with representations **314** and **318** greyed out while representation **316** is not greyed out to inform the user that base unit **C** is in clear mode when screen **400** populates the display of the handheld probe.

Once the 100% reference has been set using one of the three ways previously discussed in connection with Figures 12 to 14, the filter system is ready for measurements (i.e., filter scanning) and the downstream mode will be automatically selected but scanning is not yet started. At this juncture, the display of the handheld probe is populated with screen **370** (see Figure 21). Measured concentration is displayed at all times during a filter scan in box **371,** from whichever valve is selected. The maximum leakage detected during any given filter scan is also displayed in box **371** of screen **370**. It is beneficial to the user to be able to easily see what the maximum leakage is for any given filter scan. The reason for this is that the user needs to note the maximum leakage value to their end customer by either writing it down or remembering it. Having the maximum leakage on the display will eliminate the need to write it down or remember it.

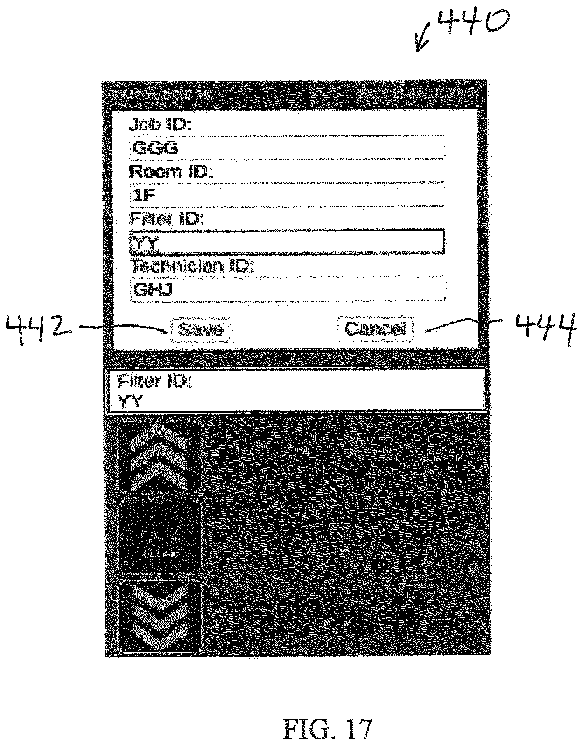

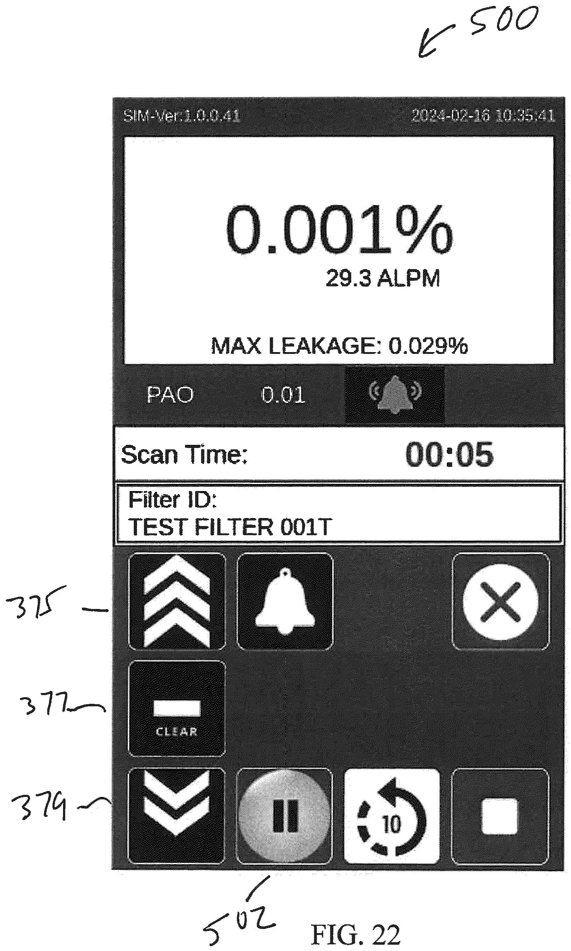

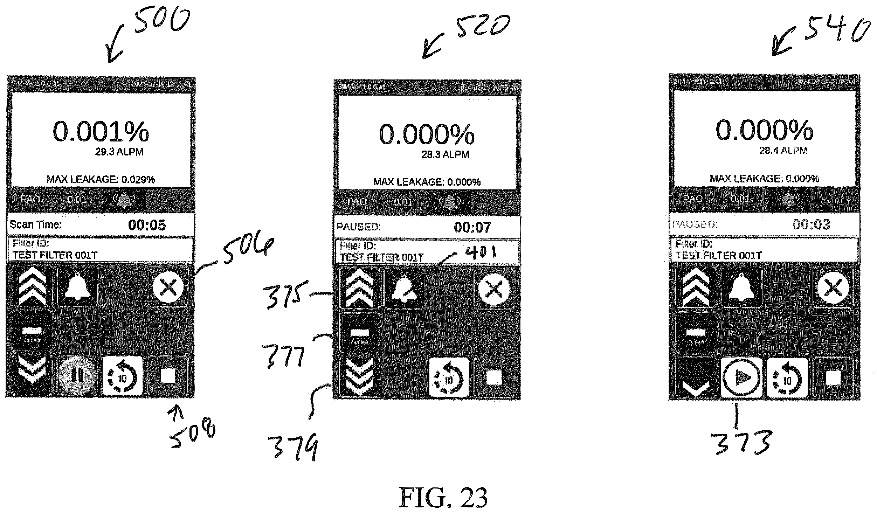

Once the user reaches screen **370**, touching the start interactive icon **373** will automatically populate the display of the handheld probe with information entry screen **440** (see Figure 17). All of the fields of screen 440 (i.e., Job ID field, Room ID field, Filter ID field and Technician ID field) are editable. The system can be configured so that one or more of the editable fields must contain a value before proceeding to scanning of any given filter. The user can save the information appearing in each of the editable fields by touching the "Save" box **442** the displayed values, cancel all information appearing in each of the editable fields by touching the "Cancel" box **444** or edit any of the editable fields by touching the corresponding box for a particular editable field. Touching "Save" box **442** will populate the display of the handheld probe with screen **500** (see Figures 22 and 23) provided that any required information in the editable fields is present and recording of filter scanning data will automatically commence.

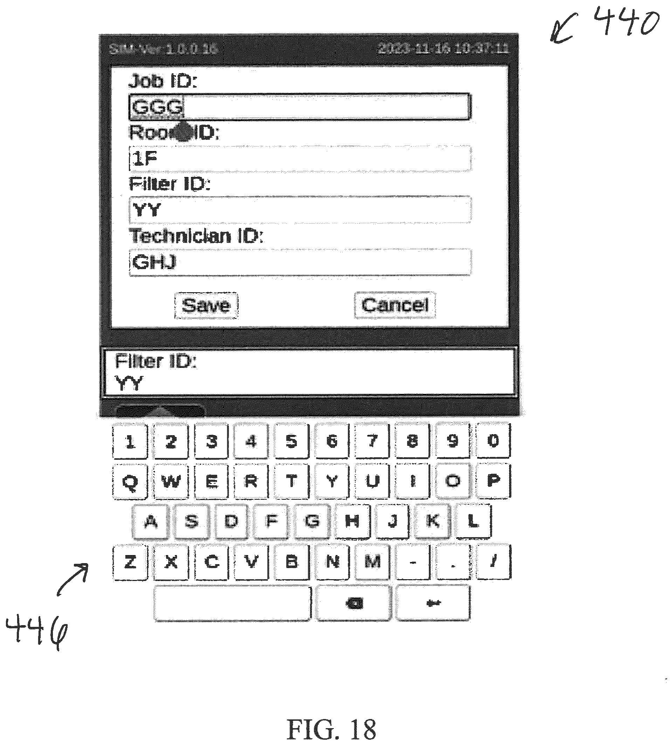

Figure 18 shows how information in any of the editable fields may be edited or changed. In Figure 18, the user has touched the box corresponding to the Job ID editable field causing the interactive edit keyboard **446** to be displayed over a lower portion of screen **440**. The user merely touches the appropriate key or keys of the interactive edit keyboard **446** to edit the information appearing in the box corresponding to the Job ID editable field. The other editable fields can be edited in a similar manner.

Information entry screen **440** will also be displayed to the user when pad and pencil icon **322** on any screen having icon **322** is activated by the user (i.e., touched by the user) to allow the user to initially populate all editable fields or alter the information in any editable fields using virtual keyboard **446.** When either the "Cancel" box or "Save" box are activated by the user, the user will be returned to the prior screen.

Scan recording can only take place when the filter system is in downstream mode. Downstream interactive icon **379** of screen **370** can be animated to inform the user that the filter system is in the downstream mode. If the user touches either the clear mode interactive icon **377** or the upstream interactive icon **375,** start icon **373** will disappear ensuring that recording of filter scan data only occurs when the system is in the downstream mode. Touching downstream interactive icon **379** will cause the start icon to reappear.

Again, the recording of filter scanning data can only occur when the filter system is in the downstream mode. Accordingly, if either icons **375** or **377** appearing on screen **500** are activating by a user touching or tapping on the same, the current filter scan will be put into a pause mode. The filter scan can also be put into pause mode by a user touching interactive pause icon **502**. If the pause mode has been activated by either method described above, the filter system stops collecting new data and the scan time is frozen to that time that the pause mode was entered, although the currently displayed screen continues to reflect the current readings as seen in screen **520** of Figure 23. For example, if the pause mode is entered 7 seconds into the filter scan, the scan time is fixed at 7 seconds. As seen in Figure 23, the "Scan Time:" can be replaced with "Paused:" to indicate to the user that the system is in pause mode. The "Paused:" portion of screen **520** and/or screen **540** can appear in red and flash to ensure that the user realizes that the system is in pause mode. In the pause mode, the system is placed in clear mode. In order to restart, the user must first place the system in downstream mode by touching icon **379** of screen **520**, whereupon the start icon 373 reappears (see screen 540 of Figure 23) and can be activated to resume the recording of filter scan data while also unfreezing the filter scan time so that the filter scan time continues to advance from the filter scan time at which the pause mode was entered.

Any time the interactive alarm toggle icon **401** appears on a screen, the user can touch this icon to toggle the alarm mode between silent and active. In silent, any and all of the alarm settings previously set are disabled. If the alarms are disabled an "X" will appear in the bell portion of icon **401** to inform the user that the auditory and vibratory alarms have been disabled with the visual alarm remaining enabled. To enable the muted to disable auditory and/or vibratory alarms, the user need only touch or tap on icon **401** again.

Any time the interactive house/home icon **504** appears on a screen (see, for example, Figure 21), the user can touch this icon to populate the display of the handheld probe with screen **560** (see Figure 19). Activation of the running man icon **562** on home screen **560** causes the display of the handheld probe to be populated with stand by screen **370**.

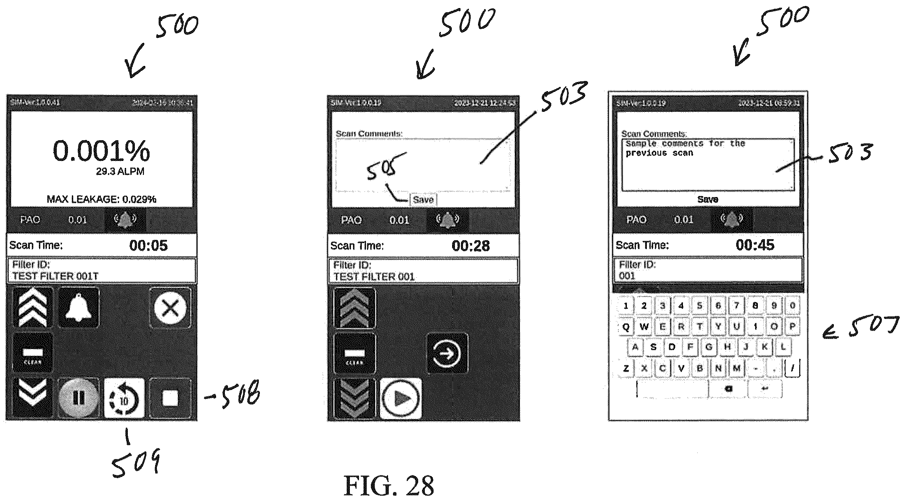

When discard icon **506** of screen **500** is activated (i.e., touched by a user) during a filter scan and subsequently confirmed by the user that activation of this icon was intended, the current filter scan will be discarded. When scan completion icon **508** of screen **500** is activated (i.e., touched by a user) during a filter scan, a pop-up window or interactive box **503** appears in the top box of screen **500** as shown in Figure 28 and the pause, rewind, discard and complete scan icons all disappear and start icon appears in the exact same space as the removed pause icon. If the user touches or otherwise activates "Save" box **505** before entering any text in comments box **503**, the system saves the record of the completed filter scan without adding any comments. If the user touches inside the comments box **501,** a virtual keyboard **507** appears on the lower portion of screen **500** which can be used to enter any desired comments a user may have for the completed filter scan.

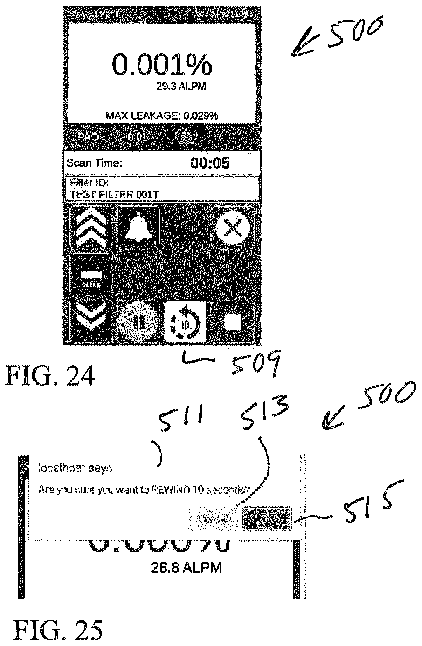

The process that ensues from a user touching or otherwise activating rewind/trim icon **509** on screen **500** during a filter scan will now be described with reference to Figures 24 to 27. Referring to Figures 24 and 25, if the user activates rewind/trim icon **509** on screen **500** during a filter scan, pop-up window **511** will appear on a portion of screen **500** (e.g., upper portion) asking the user to confirm that the rewind/trim function is to be performed.

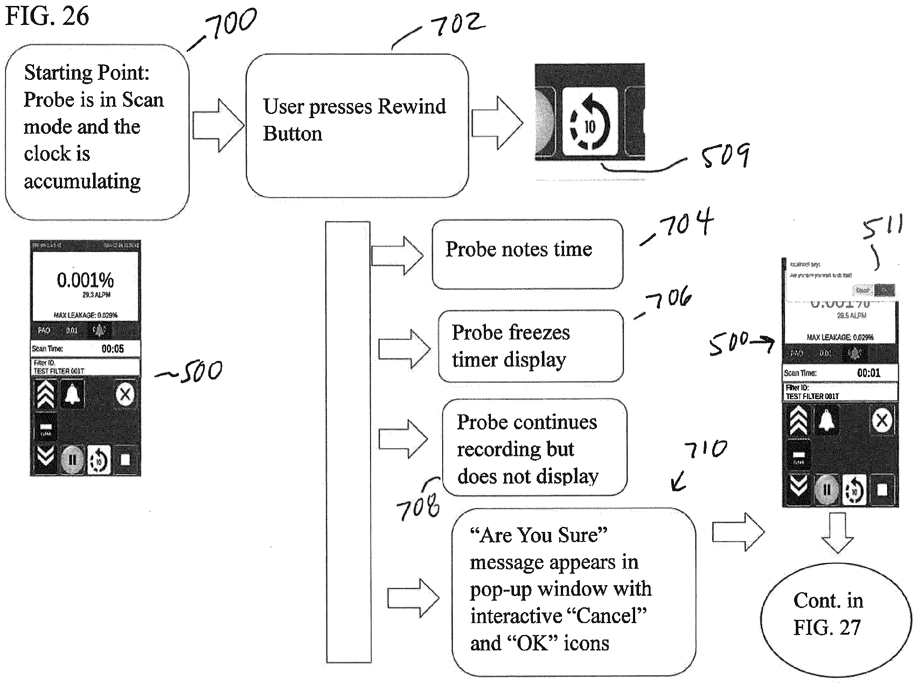

Referring to Figure 26, starting point **700** is the initial starting point in which the system is in filter scan mode and the clock corresponding to the scan time is accumulating. In step **702**, the user touches or other activates the rewind/trim icon **509**. In step **704**, the probe notes the time of activation of icon **509**. In step **706**, the probe freezes the scan time display to the elapsed scan time when icon **509** is activated, i.e., if icon **509** is activated at one minute and thirteen seconds of the filter scan, the probe freezes the scan time display to one minute and thirteen seconds. In step **708**, the probe continues recording scan data but does not display the new data. In step **710,** an "Are You Sure" message appears in pop-up window **511** with interactive "Cancel" and "OK" icons **513** and **515,** respectively.

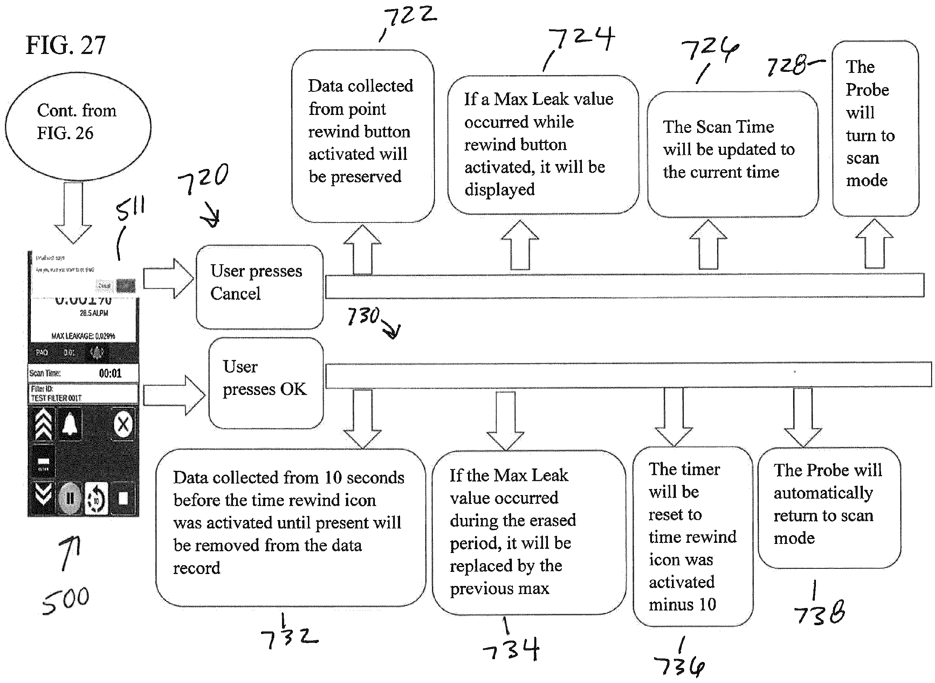

Referring to Figure 27, branch **720** of the depicted flow chart explains the processes that occur when a user activates "Cancel" icon **513** in pop-up window **511.** In step **722,** data collected from point rewind button activated to the point icon **513** will be preserved. In step 724, if a maximum leakage value occurs while icon **509** is activated, the maximum leakage value will be displayed in box **501** of screen **500**. In step **726,** the scan time will be updated to the current time. In step 728, the probe will return to scan mode as if icon **509** was never activated and all scan data from the time icon **509** was activated to the current time will be preserved.

Branch **730** of the flow chart depicted in Figure 27 explains the processes that occur when a user activates "OK" icon **515** in pop-up window **511.** In step **732,** data collected from 10 seconds immediately before the time rewind icon was activated until present time will be removed (i.e., erased) from the data record. In step **734,** if a maximum filter leakage occurs during the erased period, it will be replaced with the previous detected maximum filter leakage. In step **736,** the scan time will be reset to the time icon **509** was activated minus 10 seconds. In step **738,** the probe will automatically return to the scan mode without any other user interaction with any portion of screen **500**.

While a preferred rewind/trim period is 10 seconds, the rewind/trim period can be varied to be less than or more than 10 seconds. Further, the system can be configured to allow authorized users to adjust the rewind time period. Also, handheld probe **A** and/or base unit **C** could be modified to include a physical rewind/trim activation member. Further, the base unit could include a graphical user interface including a virtual rewind/trim activation member. Furthermore, the system could be configured such that upon activation of the rewind/trim icon the system detects a spike or other condition that is not indicative of a filter failure and rewind that portion of the scan to erase or delete the spike or other detected condition. Moreover, the system can be configured to include multiple different set of filter record scans. For example, a detailed filter scan record can be maintained that records all of the data that was erased during any and all rewind procedures so that an auditor or supervisor can review the entire record of any given filter scan including portions erased during any rewind procedure. Monitoring of the detailed filter scan record could detect abuses in use of the rewind procedure. A normal filter scan would also be maintained in which the rewind scan filter data is removed.

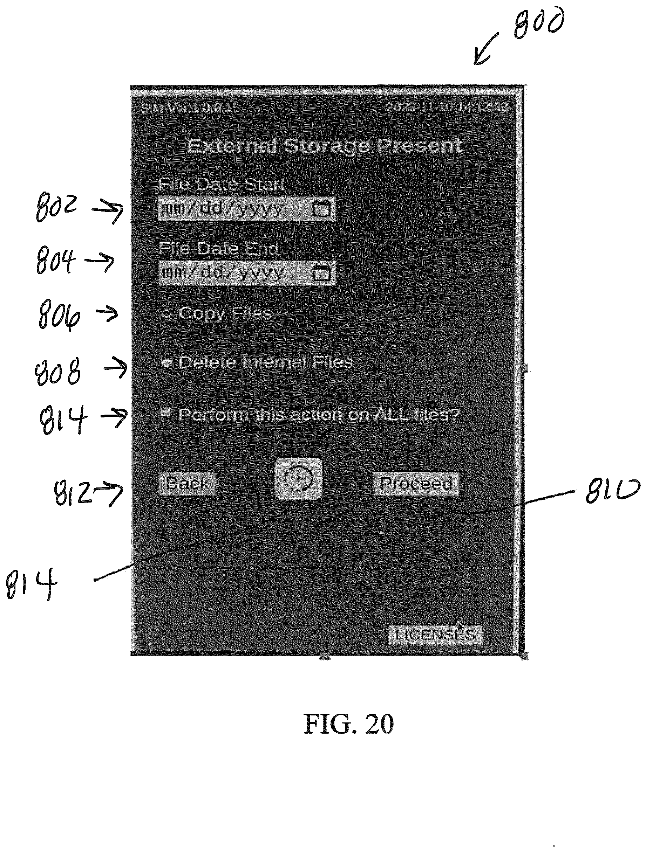

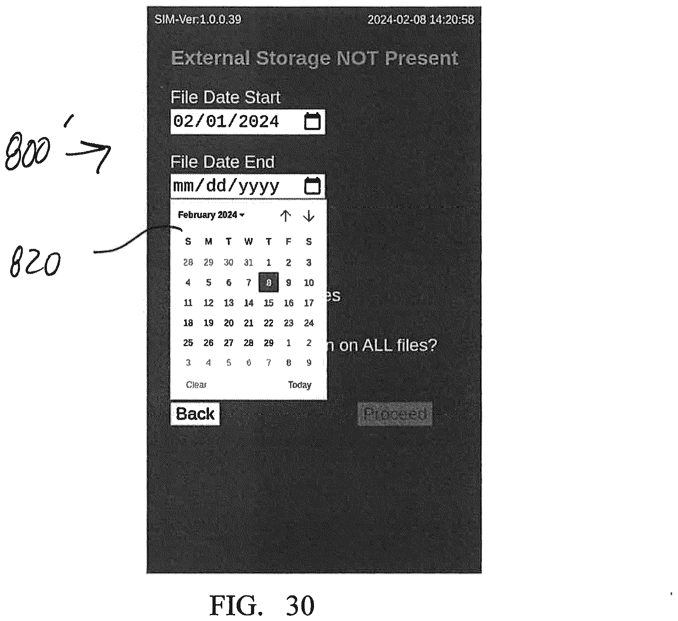

By activating file folder icon **324** on any screen in which it appears (see, for example, Figure 14), the display of the handheld probe is populated with screen **800** (see Figure 20). The user sets a start date by touching icon **802** and an end date by touching icon **804.** When icon **804** is activated, an interactive drop down calendar is displayed on screen **800** similar or the same as interactive drop down calendar **820** appearing on screen **800'** (see Figure 30) allowing the user to set a specific end date. When icon **802** is activated by a user touching this icon, a drop calendar similar to or the same as calendar **820** is displayed on screen **800** allowing the user to set a specific start date. The up and down interactive arrows appearing to the right of the month and year section, allow the user to change the month and year.

If the user designates or selects icon **806** on screen **800** by touching icon **806**, the user can copy to an external USB stick or drive all files from the designated start date to the designated end date by touching "Proceed" box **810.** After designating or selecting icon **808**, the user can delete all internal files stored in the memory of the handheld probe **210** from the designated start date to the designated end date by touching "Proceed" box **810.** If the user activates the "Back" box **812,** the user is automatically returned to the screen from which the user accessed screen **80**0. Screen **800** may also include interactive icon or graphical element **814** to have the selected function (i.e., copying or deleting) performed on all files.

Screen **800'** (see Figure 30) is similar to screen **800** and is displayed when a user activates file folder icon **324** and no external USB stick or drive is connected to socket **240** informing the user in the title of this interactive screen that "External Storage NOT Present". The copying function in screen **800'** is disabled and greyed out.

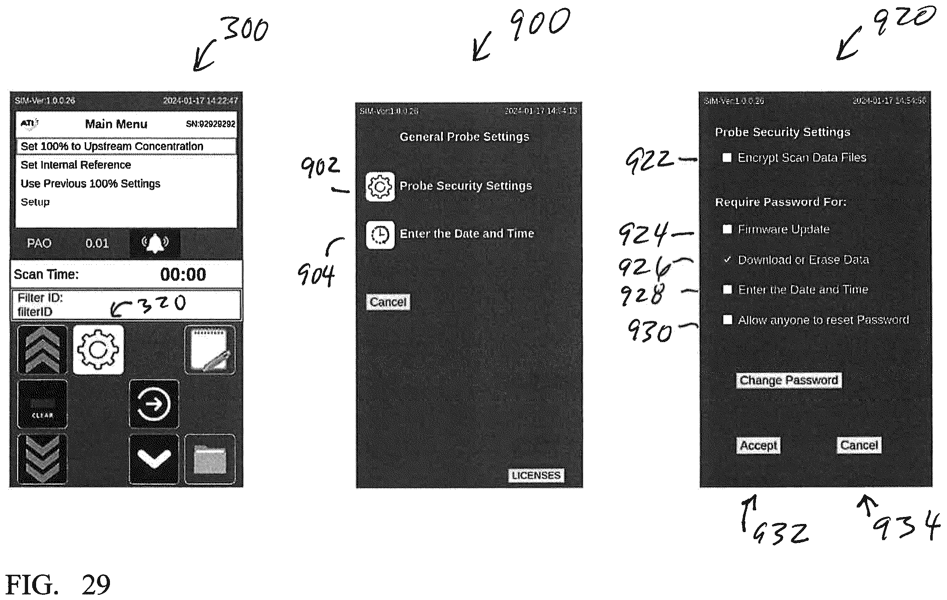

The functions that a user can perform by activating the Admin icon **320** on any screen in which appears will be described in connection with Figure 29. Specifically, the user can select touch or tap on icon **320** to update security settings. Upon activation of icon **320**, the display of the handheld probe is populated with interactive screen **900** (see Figure 29). Tapping or touching the Probe Security Settings icon **902** of screen **900** populates the display of the handheld probe with interactive screen **920**. Interactive clock icon **904** on screen **900** when activated allows the user to change the date and time. If screen **900** includes clock icon **904** then the clock icon on screen **814** on screen **800** can be omitted. If the date and time has been password protected, the user will be challenged for the password. The "Encrypt Scan Data Files" selectable item **922** under the heading "Probe Security Settings" of screen **920** when checked or selected by tapping on the corresponding box will cause all scan data files to be encrypted before they are copied to an external USB stick or drive. The password needed to decode these encrypted files can be set as the admin password. Under the heading "Require Password For:", four selectable items **924** ("Firmware Update"), **926** ("Download or Erase Data"), **928** ("Enter the Date and Time") and **930** ("Allow anyone to reset Password") can be designated or selected by tapping on the corresponding box and the user will be required to enter a password to perform any of the functions associated with any of items **924, 926, 928** and **930** that are password protected. All selections or designations made using screen **920** are implemented upon activation of the "Accept" box **932.** Activation of the "Cancel" box **934** on screen returns the user to screen **300** as does the activation of the "Cancel" box on screen **900**.

While each of the screens or user interfaces described above have icons or activation members in certain portions of the screen (e.g., lower portion, upper portion and middle portion), the location of the activation members or icons can be varied as desired. For example, on screen 900 the "Allow anyone to reset Password" 930 icon could appear at the top of screen 900.

While this invention has been described as having various preferred designs, it is understood that the preferred designs can be further modified or adapted following in general the principles of the invention and including, but not limited to such departures from the present invention as come within the known or customary practice in the art to which the invention pertains. The claims are not limited to the preferred embodiments and have been written to preclude such a narrow construction using the principles of claim differentiation.

## Claims

1. An apparatus for testing a filter, said apparatus comprising:
(a) a handheld probe for testing a filter, said handheld probe being configured to be deployed adjacent the filter being tested while the filter being tested is located in a normal operating position; and,
(b) said handheld probe further including a display for displaying one or more graphical user interfaces to the user, each of the one or more graphical user interfaces having one or more interactive icons that a user can activate to perform a predetermined operation in connection with testing the filter.

2. The apparatus of Claim 1, wherein:
(a) all activation members on the handheld probe which a user can manipulate or activate to perform any operation or function using the handheld probe are virtual activation members.

3. The apparatus of Claim 1, wherein:
(a) the apparatus is configured to display to a user a first graphical user interface having a rewind or trim interactive activation icon that when activated by the user during a filter scan can erase a predetermined time period of a filter scan performed using the handheld probe to prevent an event that is not indicative of filter efficiency or leakage from resulting in a false failure of a filter being tested.

4. The apparatus of Claim 3, wherein:
(a) the apparatus is configured such that upon activation of the rewind or trim interactive activation icon, the display presents to the user a rewind or trim activation window asking the user whether or not a rewind or trim function is to be performed.

5. The apparatus of Claim 4, wherein:
(a) the apparatus is configured such that upon activation of the rewind or trim activation interactive icon and the user interacts with the rewind or trim activation window to decline a corresponding function, a given filter scan proceeds without interruption with all filter scan data being collected for a given filter scan that would have been collected if the rewind or trim activation interactive icon was never activated.

6. The apparatus of Claim 4, wherein:
(a) the apparatus is configured such that upon activation of the rewind or trim interactive activation icon and the user interacts with the rewind or trim activation window to accept a corresponding function, a predetermined time period of the filter scan is erased and the apparatus is automatically returned to a filter scan mode.

7. The apparatus of Claim 4, wherein:
(a) the apparatus is configured such that upon activation of the rewind or trim activation interactive icon, a time of activation of the rewind or trim activation interactive icon is recorded so that if the user interacts with the rewind or trim activation window to accept performance of a rewind or trim, a period of the scan erased is a predetermined time period from a time of activation of the rewind or trim interactive activation icon to a current time.

8. The apparatus of Claim 6, wherein:
(a) the predetermined time period is less than 20% of a time period necessary to perform a complete filter scan of a filter being tested.

9. The apparatus of Claim 6, wherein:
(a) the predetermined time period is in the range of 5 to 30 seconds.

10. The apparatus of Claim 6, wherein:
(a) the predetermined time period is 10 seconds.

11. An apparatus for testing a filter, said apparatus comprising:
(a) a handheld probe for testing a filter and a base unit, said handheld probe being operably connected to said base unit and being configured to be deployed adjacent the filter being tested while the filter being tested is located in a normal operating position; and,
(b) at least one of said handheld probe and said base unit including a user activation portion including one or more user activation members that a user can activate to perform a predetermined operation or function in connection with testing the filter; and,
(c) said one or more user activation members including a rewind or trim activation member that when activated during a filter scan can erase a predetermined time period of the filter scan being performed to prevent an event that is not indicative of filter efficiency or leakage from resulting in a false failure of a filter being tested.

12. The apparatus of Claim 11, wherein:
(a) the one or more user activation members are a virtual activation member or a physical activation member.

13. The apparatus of Claim 12, wherein:
(a) the rewind or trim activation member is a virtual activation member or a physical activation member.

14. The apparatus of Claim 13, wherein:
(a) the rewind or trim activation member is a physical activation member on the handheld probe or the base unit.

15. A method of testing a filter, said including the steps of:
(a) providing a handheld probe and a base unit for testing a filter wherein during a filter scan the handheld probe is operably connected to the base unit, said handheld probe being configured to be deployed adjacent the filter being tested while the filter being tested is located in a normal operating position; and,
(b) providing at least one of said handheld probe and said base unit with a rewind or trim activation member; and,
(c) upon activation of the rewind or trim activation member, erasing a predetermined time period of a filter scan performed using the handheld probe to prevent an event that is not indicative of filter efficiency or leakage from resulting in a false failure of a filter being tested wherein the predetermined time period is less than a time necessary to scan a filter being tested.

16. The method of Claim 15, further including the step of:
(a) displaying the rewind or trim activation member as an interactive icon on a graphical user interface on a display of the handheld probe or the base unit.

17. The method of Claim 16, further including the step of:
(a) displaying the rewind or trim activation member as an interactive icon on a graphical user interface on the display of the handheld probe.

18. The method of Claim 17, further including the step of:
(a) upon user activation of the rewind or trim activation member, displaying a rewind or trim activation graphical element asking the user whether or not a rewind or trim function is to be performed.

19. The method of Claim 18, further including the step of:
(a) upon receiving user input that the rewind or trim function is to not performed, performing a filter scan as if the rewind or trim activation member was never activated.

20. The method of Claim 18, further including the step of:
(a) upon receiving user input that the rewind or trim function is to be performed, deleting all scan data from a time the rewind or trim activation member was activated for a first data record; and,
(c) automatically returning to a filter scan mode.
